# EUROPEAN PATENT APPLICATION

(11) **EP 4 756 413 A1**
(43) Date of publication of application: **10.06.2026**
(21) Application number: 25219014.5
(22) Date of filing: 27.11.2025
(51) Int. Cl.: G01N 21/89, G01N 1/00, G01N 21/95, B65B 9/04, B65B 57/02, G01M 3/02, G01N 21/90

(54) **A METHOD AND A SYSTEM FOR IDENTIFYING AND REJECTING NON-COMPLIANT SINGLE-DOSE CAPSULES**

(30) Priority: 06.12.2024 IT 202400027738
(71) Applicant: Fameccanica.Data S.p.A., 66020 San Giovanni Teatino (CH) (IT)
(72) Inventor: PEZZOTTA, Vincenzo, I-66020 San Giovanni Teatino (Chieti) (IT); ESPOSITO, Eugenio, I-66020 San Giovanni Teatino (Chieti) (IT)
(74) Representative: Buzzi, Notaro & Antonielli d'Oulx S.p.A.

(57) **Abstract**

Method and system for identifying and rejecting non-compliant single-dose capsules.

## Description

### Field of the invention

The present invention relates to the production of single-dose capsules, for example single-dose capsules containing home care compositions, such as laundry detergents, dishwasher detergents, fabric softeners and other compositions used in household appliances.

More precisely, the invention relates to a method and a system for identifying and rejecting non-compliant single-dose capsules.

### Background of the invention

Single-dose capsules are formed by water-soluble sachets containing laundry detergents or dishwasher detergents, fabric softeners or other products for household appliances. Single-dose capsules are becoming increasingly popular due to their ease of use for the consumer. Single-dose detergent capsules also have a positive impact on sustainability as they contain the precise dose of detergent for one load and are a way to reduce waste.

Single-dose capsules are generally produced by forming recesses in a first water-soluble film, filling the recesses with fluid or powder compositions, applying a second water-soluble film onto the first water-soluble film and joining the first and second water-soluble films together by water sealing so as to seal the compositions between the two water-soluble films. The sealing phase may also involve heating at least one of the two water-soluble films.

Machines for producing single-dose capsules generally form a continuous mat comprising a plurality of single-dose capsules arranged in longitudinal and transverse rows and joined together by longitudinal and transverse sealing areas along which the first and second water-soluble films are water-joined together.

The continuous mat is then cut in the longitudinal direction and in the transverse direction along the longitudinal and transverse sealing areas to form individual single-dose capsules.

One of the main challenges in this production process is ensuring the integrity of the seal between the water-soluble films, as sealing defects can lead to composition leakage throughout the production process and to lower quality final products.

Some known machines use vision systems to inspect the films and detect sealing defects. Document WO2013130439A1 describes an in-line method for rejecting defective single-dose capsules filled with a composition during the production process. The capsules are produced using water-soluble polymer films, commonly used for packaging home care compositions such as laundry or dishwashing detergents. The proposed method involves a visual inspection of the filled capsules to detect any defects, such as leaks. If a leak is detected, the defective capsules are removed from the production process along with the adjacent capsules to avoid contamination. The integrity control of the capsules is performed by a vision system that can detect the presence of leaked composition on the edges surrounding the cavities where the capsules are placed. The system uses a photosensitive compound, added to the composition, which becomes visible under ultraviolet light, facilitating the identification of any leaks.

In the solution according to WO2013130439A1 the vision system is positioned before the cutting units; therefore, in a zone of the production process where the mat of single-dose capsules has not yet been subjected to stresses that could exacerbate sealing defects.

The problem with this solution is that sealing defects may not be detected effectively because such defects may only manifest after the mat of single-dose capsules has been subjected to stress.

There is therefore a need for inspection systems that can guarantee more accurate quality control.

### Object and summary of the invention

The object of the present invention is to provide a method and a system for identifying and rejecting non-compliant single-dose capsules that overcome the problems of the prior art.

According to the present invention, this object is achieved by a method according to claim 1 and by a system according to claim 7.

Optional features of the invention form the subject of the dependent claims.

The claims form an integral part of the teachings provided in relation to the invention.

### Brief description of the drawings

Features and advantages of the invention will be apparent from the detailed description that follows, given by way of non-limiting example only, with reference to the accompanying drawings, in which:
- figure 1 is a schematic view of a machine for producing single-dose capsules, and
- figures 2 and 3 are schematic views of the part indicated by arrow II in figure 1 in two different working phases.

It will be appreciated that the accompanying drawings are schematic and that some components may not be illustrated to simplify the understanding of the figures. It will also be appreciated that various figures may not be represented to the same scale.

### Detailed description

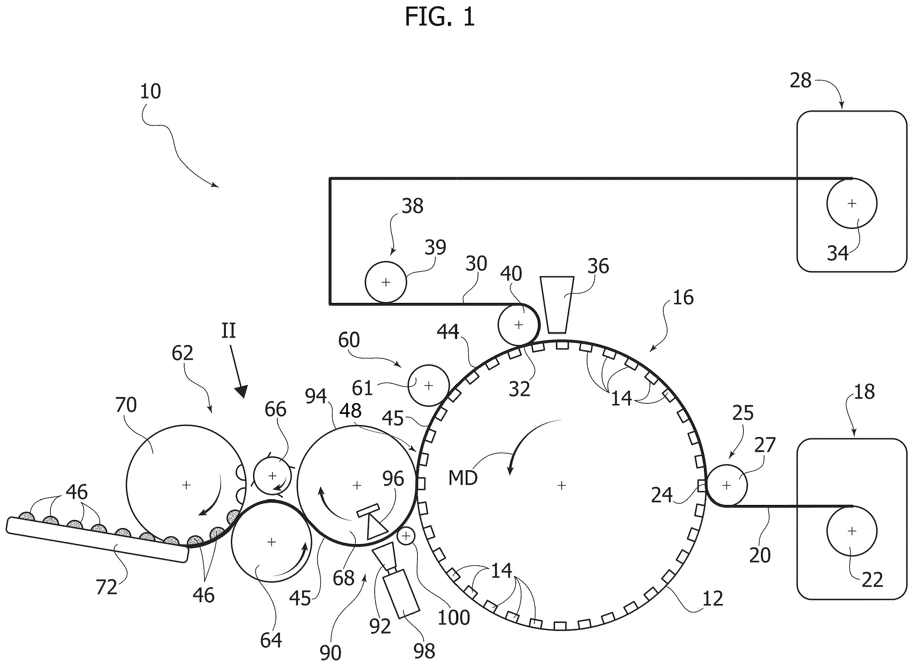

With reference to figure 1, a machine for producing single-dose capsules is indicated by reference number 10.

The machine 10 comprises a forming surface 12 having a plurality of cavities 14, moving continuously in a machine direction MD. In the embodiment illustrated in figure 1 the forming surface 12 is the external cylindrical surface of a forming wheel 16 rotatable about a horizontal axis A. In a possible embodiment, the forming surface 12 could be the external surface of a closed loop belt.

The machine 10 comprises a first feeding assembly 18 configured to feed a first continuous water-soluble film 20 onto the forming surface 12. The first continuous water-soluble film 20 is unwound from a first reel 22 and is fed onto the forming surface 12 at a first position 24.

The machine 10 may comprise a heating device 25 arranged to heat the first continuous water-soluble film 20 upstream of the forming surface 12. The heating device 25 may comprise a heated roller 27 that is in contact with the first continuous water-soluble film 20 upstream of the first position 24.

The first continuous water-soluble film 20 deforms into the cavities 14 of the forming surface 12 as it moves in the machine direction MD. The deformation of the first continuous water-soluble film 20 into the cavities 14 can be obtained by a suction system comprising a plurality of holes open on the surfaces of the cavities 14 and fluidly connected to a fixed suction chamber connected to a sub-atmospheric pressure source. The first continuous water-soluble film 20 is kept adhering to the walls of the cavities 14 by the suction system, so that a plurality of recesses having the same shape as the cavities 14 are formed in the first continuous water-soluble film 20.

The machine 10 comprises a second feeding assembly 28 configured to feed a second continuous water-soluble film 30 unwound from a second reel 34 onto the forming surface 12 at a second position 32 arranged downstream of the first position 24 with respect to the machine direction MD.

The machine 10 comprises a dosing apparatus 36 configured to dispense dosed quantities of at least one composition into the recesses of the first continuous water-soluble film 20 that are arranged in the cavities 14 of the forming surface 12. The dosing apparatus 36 is arranged in an intermediate position between the first position 24 and the second position 32. The dosing apparatus 36 fills the recesses of the first continuous water-soluble film 20 with one or more compositions. After the recesses of the first continuous water-soluble film 20 have been filled with the compositions, the second continuous water-soluble film 30 is applied onto the first continuous water-soluble film 20, so as to enclose the dosed quantities of compositions contained in the recesses between the first and second continuous water-soluble films 20, 30.

The machine 10 comprises a wetting unit 38 configured to wet a surface of the second continuous water-soluble film 30 upstream of the second position 32. The wetting unit 38 comprises a wetting roller 39 that is in contact with the surface of the second continuous water-soluble film 30 that comes into contact with the first continuous water-soluble film 20.

The machine 10 may comprise a compression roller 40 configured to press the first and second continuous water-soluble films 20, 30 against the forming surface 12 in the contact areas surrounding the cavities 14 containing the dosed compositions. The machine 10 may also comprise a heated roller in contact with the second water-soluble film to promote sealing. The heated roller may be the same compression roller 40. The heated roller may be omitted in the case where a good quality of the sealing is achieved without heating one of the water-soluble films.

The first and second continuous water-soluble films 20, 30 are water-sealed to each other in respective sealing areas surrounding the recesses containing the dosed compositions.

After the mutual fixing between the first and second continuous water-soluble films 20, 30, a continuous mat 44 is formed comprising a plurality of single-dose capsules 46 arranged in longitudinal and transverse rows and joined together by sealing areas.

With reference to figures 1-3, the machine 10 comprises a longitudinal cutting unit 60 and a transverse cutting unit 62 that cut the continuous mat 44 along the sealing areas so as to form individual single-dose capsules 46.

In a possible embodiment the machine 10 may comprise a single cutting unit that cuts the continuous mat 44 along round or shaped cutting profiles surrounding the respective single-dose capsules.

The longitudinal cutting unit 60 may be arranged upstream of the transverse cutting unit 62 with reference to the machine direction MD. The longitudinal cutting unit 60 may comprise a plurality of disks 61 cooperating with the forming surface 12 and arranged to cut the continuous mat 44 along the longitudinal sealing areas 54. The longitudinal cutting unit 60 subdivides the continuous mat 44 into a plurality of continuous longitudinal rows 45 parallel to each other.

The transverse cutting unit 62 comprises an anvil roller 64 and a knife roller 66, rotatable about respective axes of rotation parallel to each other and orthogonal to the machine direction MD. The continuous longitudinal rows 45 formed downstream of the longitudinal cutting unit 60 pass between the anvil roller 64 and the knife roller 66 and are cut so as to form individual single-dose capsules 46. The positions of the anvil roller 64 and the knife roller 66 could be inverted with respect to the position illustrated in the figures.

Downstream of the anvil roller 64, an output wheel 70 is arranged which picks up the individual single-dose capsules 46 on the surface of the anvil roller 64 and transfers them onto an output conveyor 72. The output wheel 70 may retain the individual single-dose capsules 46 by suction. The output conveyor 72 may be replaced by a wheel. The transverse cutting of the continuous longitudinal rows 45 may be carried out according to the modalities described in EP-A-4296025 of the same Applicant.

The machine 10 comprises a vision system 90 configured to optically inspect at least one of the first water-soluble film 20 and the second water-soluble film 30 of at least one group of single-dose capsules 48 so as to acquire images of the single-dose capsules.

According to the present invention, the vision system 90 is configured to inspect the group of single-dose capsules 48 after it has been subjected to a stress.

In a possible embodiment, the group of single-dose capsules 48 may be formed by a plurality of continuous longitudinal rows 45 parallel to each other formed at the outlet of the longitudinal cutting unit 60.

In a possible embodiment, the group of single-dose capsules 48 may be formed by a plurality of individual single-dose capsules 46 separated from each other.

The inspection phase may be carried out after the group of single-dose capsules 48 has been subjected to one or more stresses selected from:
- the passage of the group of single-dose capsules 48 from one roller to a subsequent roller, and/or
- the cutting of the group of single-dose capsules 48, and/or
- the compression of the group of single-dose capsules (48) via a pressure roller 100.

These stresses can cause defects or leaks that are not detectable before the stresses to emerge. Performing the visual integrity control after one or more stresses simulates conditions closer to real usage or transport conditions, increasing the probability of identifying defective capsules that might otherwise go unnoticed.

An electronic control unit 98 is configured to identify at least one non-compliant single-dose capsule in at least one group of single-dose capsules 48 from the acquired images.

A rejection device is configured to reject the non-compliant single-dose capsules in at least one group of single-dose capsules 48.

In the embodiment illustrated in the figures the vision system 90 is arranged downstream of the longitudinal cutting unit 60 that forms the continuous longitudinal rows 45 and upstream of the transverse cutting unit 62.

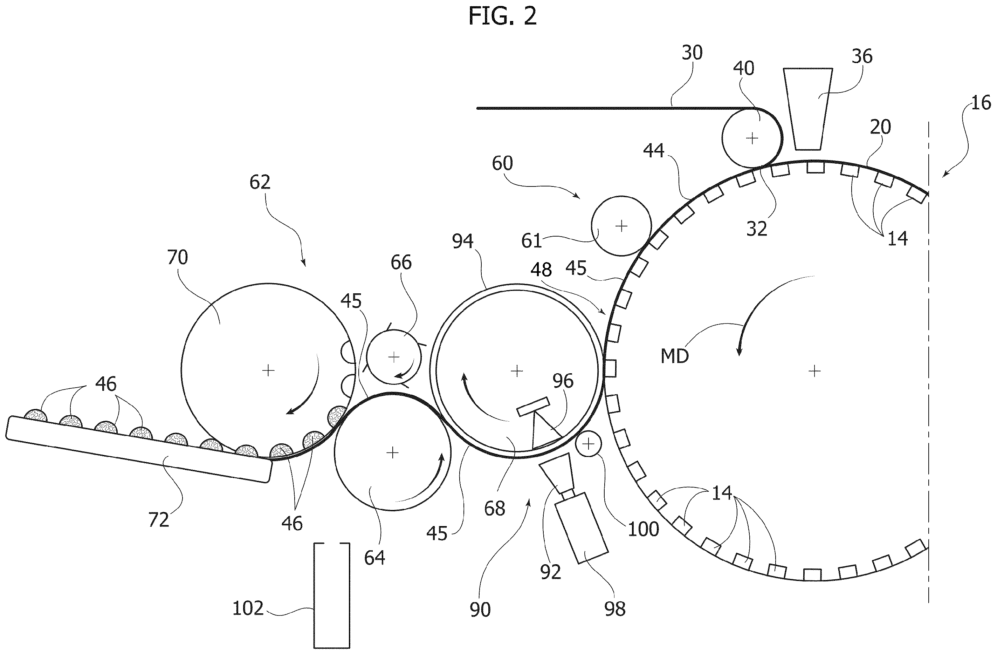

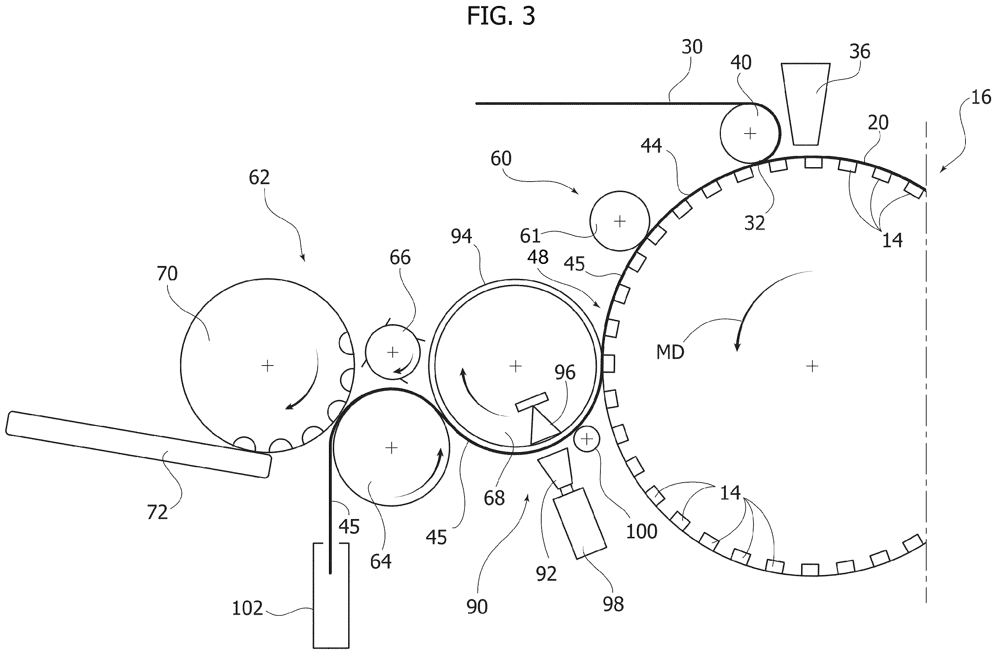

With reference to figures 2 and 3, the machine 10 may comprise a transfer wheel 68 that transfers the continuous longitudinal rows 45 from the forming surface 12 to the anvil 64 of the transverse cutting unit 62.

The vision system 90 may comprise a video camera 92 facing the external surface 94 of the transfer wheel 68. The vision system 90 may comprise an illuminator 96 arranged inside the transfer wheel 68. In this case the external surface 94 of the transfer wheel 68 is permeable to light. For example, the external surface 94 of the transfer wheel 68 may be transparent or perforated.

The video camera 92 has the capability of detecting the presence of composition between adjacent capsules or leaking from the external surface of the capsules, which would give rise to capsules that are not completely closed and therefore to be rejected.

The vision system 90 may be configured to inspect the continuous longitudinal rows 45 while they lie on a smooth surface.

The signals provided by the video camera 92 are processed by the electronic control unit 98 which is configured to process the images provided by the video camera 92 and to detect the presence of leaks along the sealing areas or on the external surfaces of the single-dose capsules. The electronic control unit 98 is capable of determining the geometric coordinates of the leak areas detected by the video camera 92 and can command a rejection device configured to reject single-dose capsules adjacent to zones in which leaks have been detected.

In a possible embodiment the machine 10 may comprise a pressure roller 100 configured to compress the longitudinal rows of single-dose capsules against the external surface 94 of the transfer wheel 68 upstream of the vision system 90. The pressure roller 100 generates an increase in the pressure of the compositions enclosed between the first and second water-soluble films 20, 30 and further stresses the sealing areas of the capsules, making the visual integrity control even more effective for the detection of defective capsules that would not be detected as such without being subjected to a stress.

The electronic control unit 98 may be configured to command a rejection procedure of defective capsules following the detection of a leak.

With reference to figure 3, the rejection procedure may involve the stop of the rotation of the knife roller 66 of the transverse cutting unit 62 and the interruption of the suction on the output wheel 70. In this way, the continuous longitudinal rows 45 are not transversely cut on the anvil roller 64 and are not picked up by the output wheel 70. The continuous longitudinal rows 45 at the outlet of the anvil roller 64 are sent towards a scrap collection channel 102 as illustrated in figure 3.

After the parts of the continuous longitudinal rows 45 on which a leak has been detected have been rejected, the rejection procedure is interrupted. The knife roller 66 resumes the transverse cutting of the continuous longitudinal rows 45 and the suction on the output wheel 70 is restored so as to transfer the individual single-dose capsules onto the output conveyor 72.

From the preceding description it is evident that the visual integrity control performed after a stress allows increasing the effectiveness of the control as it increases the probability of identifying defective capsules that in the absence of a stress might appear compliant.

In operation, the previously described machine implements a method for identifying and rejecting non-compliant single-dose capsules from at least one group of single-dose capsules 48, comprising:
- optically inspecting at least one of a first water-soluble film 20 and a second water-soluble film 30 of at least one group of single-dose capsules 48 so as to acquire images of the single-dose capsules after at least one group of single-dose capsules 48 has been subjected to one or more stresses,
- identifying at least one non-compliant single-dose capsule in at least one group of single-dose capsules 48 from the acquired images,
- rejecting said at least one non-compliant single-dose capsule in said at least one group of single-dose capsules 48.

The group of single-dose capsules 48 may be formed by a plurality of continuous longitudinal rows 45 parallel to each other, each of which is formed by single-dose capsules 46 joined together.

The group of single-dose capsules 48 may be formed by a plurality of individual single-dose capsules 46 separated from each other.

The inspection phase may be carried out after said at least one group of single-dose capsules 48 has been subjected to stresses selected from:
- the passage of said group of single-dose capsules 48 from one roller to a subsequent roller, and/or
- the cutting of said group of single-dose capsules 48, and/or
- the compression of said group of single-dose capsules 48 via a pressure roller 100.

The optical inspection may comprise the use of a video camera 92 facing an external surface of a transfer wheel 68.

The optical inspection may comprise the use of an illuminator 96 arranged inside the transfer wheel 68 and the transfer wheel 68 may have an external surface 94 permeable to light.

Naturally, the principle of the invention remaining the same, the construction details and the forms of embodiment may be widely varied with respect to what has been described and illustrated, without thereby departing from the scope of the invention as defined by the claims that follow.

### List of reference numbers

- 10: machine for producing single-dose capsules
- 12: forming surface
- 14: cavities
- 16: forming wheel
- 18: first feeding assembly
- 20: first continuous water-soluble film
- 22: first reel
- 24: first position
- 25: heating device
- 27: heated roller
- 28: second feeding assembly
- 30: second continuous water-soluble film
- 32: second position
- 34: second reel
- 36: dosing apparatus
- 38: wetting unit
- 39: wetting roller
- 40: compression roller
- 44: continuous mat
- 45: continuous longitudinal rows
- 46: individual single-dose capsules
- 48: group of single-dose capsules
- 54: longitudinal sealing areas
- 60: longitudinal cutting unit
- 61: disks
- 62: transverse cutting unit
- 64: anvil roller
- 66: knife roller
- 68: transfer wheel
- 70: output wheel
- 72: output conveyor
- 90: vision system
- 92: video camera
- 94: external surface of the transfer wheel
- 96: illuminator
- 98: electronic control unit
- 100: pressure roller
- 102: scrap collection channel

## Claims

1. A method for identifying and rejecting non-compliant single-dose capsules from at least one group of single-dose capsules (48), comprising:
- optically inspecting at least one of a first water-soluble film (20) and a second water-soluble film (30) of said at least one group of single-dose capsules (48) so as to acquire images of said single-dose capsules, after said at least one group of single-dose capsules (48) has been subjected to one or more stresses,
- identifying at least one non-compliant single-dose capsule in said at least one group of single-dose capsules (48) from said acquired images,
- rejecting said at least one non-compliant single-dose capsule in said at least one group of single-dose capsules (48).

2. The method of claim 1, wherein said group of single-dose capsules (48) is formed by a plurality of continuous longitudinal rows (45) parallel to each other, each of which is formed by single-dose capsules (46) joined together.

3. The method of claim 1, wherein said group of single-dose capsules (48) is formed by a plurality of individual single-dose capsules (46) separated from each other.

4. The method of any one of the preceding claims, wherein said inspection phase is carried out after said at least one group of single-dose capsules (48) has been subjected to stresses selected from:
- the passage of said group of single-dose capsules (48) from one roller to a subsequent roller, and/or
- the cutting of said group of single-dose capsules (48), and/or
- the compression of said group of single-dose capsules (48) via a pressure roller (100).

5. The method of any one of the preceding claims, wherein the optical inspection comprises the use of a video camera (92) facing an external surface of a transfer wheel (68).

6. The method of claim 5, wherein the optical inspection comprises the use of an illuminator (96) arranged inside the transfer wheel (68) and wherein the transfer wheel (68) has an external surface (94) permeable to light.

7. A system for identifying and rejecting non-compliant single-dose capsules in at least one group of single-dose capsules (48) comprising:
- a vision device (90) configured to optically inspect at least one of the first water-soluble film (20) and the second water-soluble film (30) of said at least one group of single-dose capsules (48) so as to acquire images, after said at least one group of single-dose capsules (48) has been subjected to one or more stresses,
- an electronic control unit (98) configured to identify at least one non-compliant single-dose capsule in said at least one group of single-dose capsules (48) from said acquired images,
- a rejection device configured to reject at least said non-compliant single-dose capsule in said at least one group of single-dose capsules (48).

8. The system of claim 7, comprising a longitudinal cutting unit (60) that forms continuous longitudinal rows (45) of single-dose capsules (46), wherein the vision system (90) is configured to inspect said continuous longitudinal rows (45) while these lie on a smooth surface.

9. The system of claim 7 or claim 8, wherein the vision system (90) comprises a video camera (92) facing an external surface of a transfer wheel (68) arranged between a forming surface (12) and an anvil roller (64) of a transverse cutting unit (62).

10. The system of any one of claims 7-9, wherein the vision system (90) comprises an illuminator (96) arranged inside the transfer wheel (68) and wherein the transfer wheel (68) has an external surface (94) permeable to light.
